# FASCICULE DE BREVET EUROPEEN

(11) **EP 1 138 210 B1**
(45) Date de publication et mention de la délivrance du brevet: **01.09.2004**
(21) Numéro de dépôt: 00106878.2
(22) Date de dépôt: 31.03.2000
(51) Int. Cl.: A23L 1/39, A23L 1/40, A23P 1/02, A23L 1/0522

(54) **Epaississant instantané**
Stärkehaltiges Instant-Produkt
Instant thickener

(43) Date de publication de la demande: 04.10.2001
(73) Titulaire: SOCIETE DES PRODUITS NESTLE S.A., 1800 Vevey (CH)
(72) Inventeur: Dupart, Pierre, 8053 Zuerich/Witikon (CH); Geromini, Osvaldo, 1350 Orbe (CH); Savoy, Jean-Louis, 1436 Chamblon (CH); Bloechlinger, Kurt, Grafstal, 8310 Kemptthal (CH)
(74) Mandataire: Thomas, Alain

(56) Documents cités:
- EP-A- 0 112 504
- EP-A- 0 384 124
- EP-A- 0 796 567
- US-A- 5 332 585

## Description

La présente invention se rapporte à un agent liant/épaississant, facilement dispersable dans l'eau chaude, entrant dans la composition de produits alimentaires du type sauces, jus, soupes ou plats cuisinés déshydratés instantanés. La présente invention concerne aussi un procédé de fabrication d'un tel agent épaississant.

Les produits farineux et/ou amylacés du type farine de blé, farine de maïs ou fécule de pomme de terre sont classiquement utilisés et connus en cuisine pour lier et épaissir des sauces ou des soupes. De tels produits sont ajoutés à un liquide plus ou moins aromatisé, éventuellement additionné de matière grasse, et le tout est cuit et homogénéisé pendant un temps, à une température et sous agitation suffisants pour assurer gonflement et gélatinisation de l'amidon. Ces produits ne sont pas dispersables instantanément dans l'eau chaude et nécessitent ce traitement thermo-mécanique pendant un temps assez long pour éliminer les grumeaux. D'autre part ces ingrédients farineux utilisés comme épaississant ont le défaut, malgré le chauffage, de procurer au produit fini un goût de "farine crue".

Pour pallier en partie ces problèmes et obtenir un produit aisément dispersable, des procédés de cuisson-extrusion de farines ont été développés.

FR 2614765 décrit un procédé de fabrication d'un mix pour roux par cuisson-extrusion. En effet les roux classiques sont trop visqueux pour être correctement homogénéisés dans des récipients du type marmite. Ce document décrit la fabrication d'un mélange pour roux dans une extrudeuse bi-vis. Ce procédé consiste donc à extruder et chauffer un mélange de matière grasse et de produit farineux dans un extrudeur bi-vis à un température de 60 à 220 °C pendant 25 sec à 25 minutes. Il est spécifié que la quantité de matière grasse n'est pas inférieure à 8 %, et est préférentiellement comprise entre 15 et 50 %. L'extrusion est réalisée sans eau rajoutée. La pression maximale appliquée lors du pétrissage-chauffage est de l'ordre de 50 bar.

FR 2268473 décrit un produit plus ou moins expansé fabriqué par cuisson-extrusion d'amidon de pomme de terre dont le degré d'hydratation maximum est de l'ordre de 40 %. Le produit obtenu peut être séché et broyé afin d'être délayé pour consommation immédiate dans le cadre de l'alimentation humaine ou animale. Dans ce document, les inventeurs cherchent non pas à conserver mais à réduire la viscosité d'au moins 50 % par rapport à la viscosité développée par le produit amylacé non cuit-extrudé. Il s'agit de dextriniser et de rendre ainsi soluble un grande partie de l'amidon pour réduire au maximum sa viscosité. D'autre part aucune matière grasse n'est mise en oeuvre.

FR 2233946 décrit un procédé de cuisson-extrusion-expansion d'un mélange contenant de l'amidon éventuellement associé à des protéines. Ce document concerne aussi des produits diététiques cuits expansés obtenus par le procédé ainsi que des semoules et farines instantanées obtenues par broyage de ces produits expansés. Le procédé consiste à appliquer la technique de la cuisson-extrusion en présence de la seule eau de constitution du mélange. La teneur en matière grasse du mélange est limitée à 2 %, cette faible teneur est spécifié comme caractéristique essentielle. Enfin, la température à l'intérieur de l'extrudeur croît par paliers de l'entrée vers la buse de sortie et la vitesse de rotation des vis est lente, de l'ordre de 28 à moins de 100 tours/minute.

US 5145705 décrit un procédé de fabrication d'une base pour roux. Un tel produit contient au moins 25 % de matière grasse. Le temps de mélange, éventuellement effectué en extrudeur, est compris entre 2 minutes et 1 heure. Tous les exemples sont réalisés en mode discontinu dans un récipient fermé.

EP 769501 décrit un procédé de fabrication d'amylopectine cisaillée sous forme pulvérulente. Ce procédé n'envisage pas l'utilisation de matière grasse. De plus les solutions reconstituées par réhydratation de la poudre obtenue par ce procédé ne développent qu'une faible viscosité.

EP 384124 décrit la fabrication d'un liant instantané par cuisson-extrusion. Le procédé est caractérisé par l'absence d'ajout d'eau. D'autre part, même si le produit final contient de la matière grasse, celle-ci n'est pas introduite dans l'extrudeur mais par enrobage des particules issues de l'extrudeur.

Les procédés de cuisson-extrusion imposent des conditions drastiques de température, de pression et de cisaillement. Ainsi ces procédés font-ils que le produit obtenu extrudé, après dispersion dans l'eau chaude, ne développe qu'une viscosité réduite qui ne correspond qu'à 40 % environ de la viscosité que l'on obtiendrait avec le mélange initial avant extrusion. On définit ainsi la notion de viscosité potentielle : il s'agit de la viscosité que développerait le mélange de départ (avant cuisson-extrusion) après dispersion forcée et cuisson classique en milieu aqueux.

Les épaississants à dispersion instantanée obtenus par cuisson-extrusion de farines présentent donc un effondrement de la viscosité par rapport au produit natif.

D'autre part, les produits du type épaississants instantanés classiques sont sujets au phénomène de "post-thickening", c'est à dire que la viscosité du mélange obtenu par dispersion évolue au cours du temps dans le sens d'un épaississement lorsque le produit n'est pas maintenu a haute et constante température. Ceci est le cas classique des soupes ou sauces reconstituées ainsi avec de l'eau à une température proche de 100°C. Après la reconstitution, ces produits n'étant pas consommés à une telle température en 1 ou 2 minutes, ont le temps de refroidir. Un refroidissement, même faible, entraîne ce phénomène de "post-thickening" ou post-épaississement, néfaste aux qualités organoleptiques du produit ainsi obtenu. Le produit ainsi reconstitué n'est plus crémeux, onctueux et velouté mais très épais, dense et consistant.

Le but de la présente invention consiste donc à fournir un produit épaississant instantané, sans goût de cru, qui développe, après dispersion rapide dans l'eau chaude et sans cuisson supplémentaire, une viscosité la plus élevée et la plus proche possible de la viscosité potentielle du produit natif, viscosité qui soit stable sur une gamme de température et de temps relativement grande.

A cet effet, le produit selon l'invention est un agent épaississant-liant facilement dispersable dans l'eau chaude comprenant en pourcent en poids : 60 à 80 % de farine, 20 à 40 % d'amidon, 5 à 15 % d'eau, 0 à 2 % de bicarbonate de Sodium, 2 à 6 % de matière grasse et 0,5 à 3 % d'au moins un émulsifiant, dans lequel 40 à 80 % des grains d'amidon ont perdu leur structure cristalline tout en conservant leur intégrité.

La présente invention concerne aussi le procédé de fabrication d'un épaississant instantané par traitement dans un cuisseur-extrudeur à une température comprise entre 80 et 180°C, sous une pression de 50 à 160 bars et pendant 10 à 60 secondes, d'un mélange comprenant en pourcent en poids : 60 à 80 % de farine, 20 à 40 % d'amidon, 2 à 10 % d'eau ajoutée, 0 à 2 % de bicarbonate de Sodium, 2 à 6 % de matière grasse et 0,5 à 3 % d'au moins un émulsifiant, dans lequel le cuiseur-extrudeur comprend au moins un dispositif d'inversion du flux de matière prévu dans les deux tiers aval du cuiseur-extrudeur et la matière est refroidie aux environs de 60 à 100°C au sein du cuiseur-extrudeur après le dispositif d'inversion du flux de matière.

Ainsi, et de manière étonnante, grâce à la combinaison des conditions de cuisson-extrusion et des ingrédients mis en oeuvre, obtient-on un épaississant cuit-extrudé capable de développer après dispersion dans l'eau chaude une viscosité de l'ordre de 70 à 80 % de la viscosité développée par cuisson en milieu aqueux du même mélange avant cuisson-extrusion. C'est à dire que l'on conserve jusqu'à environ 70 à 80 % de la viscosité potentielle. D'autre part, une fois le produit selon l'invention dispersé dans un liquide chaud, la viscosité obtenue reste relativement constante et le phénomène de post-thickening est ainsi évité.

La farine utilisée peut être de la farine de blé ou de la farine de maïs, par exemple. L'amidon peut être un amidon de pomme de terre, de tapioca, de blé ou de maïs, natif ou modifié physiquement et/ou chimiquement, par exemple. L'émulsifiant mis en oeuvre peut être un monoglyceride, un mélange de monoglycérides ou un dérivé, utilisés seuls ou en mélange, du type DIMODAN® commercialisé par la société DANISCO, par exemple. La matière grasse peut être une huile ou une graisse végétale ou animale, utilisée seule ou en mélange. Il peut s'agir d'huile de tournesol, d'arachide de palme, plus ou moins hydrogénées, par exemple.

Lors du procédé de cuisson-extrusion les émulsifiants sont amenés à former des complexes avec l'amylose. Ces émulsifiants jouent aussi un rôle de lubrifiant au sein de l'extrudeur ce qui diminue le cisaillement appliqué aux granules d'amidon. Cette diminution de l'énergie mécanique permet de limiter la destruction des grains d'amidon et de conserver ainsi une partie de leur intégrité physique. On a pu remarquer que la mise en oeuvre de l'émulsifiant permet de réduire la pression tant au niveau de la buse de l'extrudeur qu'au niveau de l'espace entre les vis ; ces pressions sont réduites d'environ 40 % grâce à l'ajout d'émulsifiant.

Cette diminution du cisaillement se traduit par le fait que certains granules d'amidon sont encore intacts et ont ainsi conservés toute leur intégrité après le procédé de cuisson-extrusion. Le produit en sortie du cuiseur-extrudeur présente ainsi un taux de gélatinisation compris entre 50 et 80 % environ. Ainsi, on a remarqué que le mélange cuit-extrudé contenant une majorité de granules d'amidon gélatinisés intacts développe une plus forte viscosité qu'un mélange contenant en majorité des grains éclatés. En fait, on a un mélange de grains intacts et gonflés et de grains gonflés endommagés et c'est ce mélange qui permet, paradoxalement, d'obtenir une viscosité élevée.

Pour la mise en oeuvre du présent procédé pour fabriquer un épaississant, un mélange ayant la composition indiquée précédemment peut être préparé en mélangeant intimement les ingrédients pulvérulents et en ajoutant ensuite les ingrédients fluides ou liquides dans la première section de mélange d'un extrudeur, par exemple. Le mélange comprend une quantité d'eau rajoutée telle que la teneur en eau puisse être comprise entre 15 et 23 %, environ. La cuisson du mélange peut être réalisée dans les portions chauffantes d'un extrudeur dans lesquelles le mélange peut être chauffé, compressé et cisaillé de manière à former une masse cuite plastique. Cette masse cuite peut être extrudée à travers une filière grâce à une vis ou une double vis de l'extrudeur.

Pour la mise ne oeuvre de ces opérations de mélange, malaxage, cuisson, pétrissage, cisaillement et extrusion, un cuiseur-extrudeur courant de l'industrie alimentaire peut être utilisé, de préférence un extrudeur double vis. Un extrudeur d'une longueur comprise entre 800 et 1500 mm ou plus peut être utilisé, ce qui permet un temps de résidence de l'ordre de 10 à 60 secondes.

L'opération de cuisson-extrusion peut être réalisée au sein d'un cuiseur extrudeur du type CLEXTRAL® BC 45, d'une longueur de 1200 mm, par exemple. Cet équipement comprend un fourreau à l'intérieur duquel sont disposées deux vis tournant dans le même sens et s'engrenant l'une dans l'autre. Le fourreau est thermostaté, ce qui permet le chauffage et ou le refroidissement de la matière en cours de malaxage. La configuration des vis est choisie de manière à fournir une énergie mécanique et un cisaillement faible au mélange. Ainsi, le niveau d'énergie mécanique que l'on fourni au mélange malaxé-cuit-extrudé peut être compris entre 0.07 et 0.15 kW/kg de produit.

Le cuiseur-extrudeur peut comprendre 4 à 6 zones de chauffage, par exemple. Dans la première zone, la configuration des vis peut être telle (pas de vis assez important) que les ingrédients sont mélangés et transportés. Dans les deux ou trois zones suivantes, la matière peut être transportée, pétrie, malaxée grâce à un pas de vis dont la valeur diminue progressivement. Dans ces zones, la matière peut aussi être cuite, la température peut ainsi être comprise entre 90 et 180 °C. Enfin, dans la ou les dernières zones, la température peut être abaissée jusqu'aux environs de 60 à 80 °C. La régulation thermique le long du malaxeur peut être assurée par des dispositifs de chauffage par induction, par exemple. Le profil de température depuis la zone d'entrée jusqu'à la sortie peut présenter la forme d'une cloche. Ainsi la température peut-elle croître depuis la température ambiante jusqu'aux environs de 150 à 180°C jusqu'au niveau du dispositif d'inversion du flux de matière et être abaissée aux alentours de 60 à 80°C entre ce dispositif et la sortie, par exemple. Une telle température dans les premières zones permet de cuire le produit et de gélatiniser une partie de l'amidon. Par la suite, la diminution de température permet de ne pas endommager plus au-delà les grains d'amidon et de conserver le taux de gélatinisation.

Dans la dernière zone, la matière peut être pétrie et forcée à travers une filière disposée à l'extrémité de la ou des vis de l'extrudeur. La filière peut comprendre un ou plusieurs ouvertures dont le diamètre peut être compris entre 2 et 5 mm, par exemple.

Le produit ainsi cuit-extrudé en sortie de filière présente un taux d'humidité qui peut être compris entre 10 et 20 %, environ. Le produit obtenu selon le procédé peut être séché par tout moyen adéquat connu de l'homme du métier, ceci jusqu'à un taux d'humidité compris entre 4 et 11 %, environ et de préférence entre 5 et 7 %, environ. Le produit obtenu en sortie de filière peut être broyé jusqu'à une granulométrie comprise entre 0,1 et 3 mm, de préférence 0,15 et 1 mm. Suivant le taux d'humidité et les dimensions du produit en sortie de filière, un séchage peut être réalisé après l'étape de broyage.

Le produit selon l'invention ainsi obtenu peut être revêtu ou enduit de matière grasse, une telle enduction peut augmenter le taux de matière grasse du produit jusqu'aux environs de 36 %. La matière grasse utilisée peut être un corps gras animal ou végétal, plus ou moins hydrogéné. Ce peut être de l'huile de tournesol, d'arachide, de palme, un suif, par exemple.

La ou les vis de l'extrudeur peuvent comprendre en particulier deux arbres parallèles tournant dans le même sens sur lesquels sont enfilés et fixés les uns contre les autres des bi-lobes présentant chacun la forme d'une tranche de vis dont l'épaisseur peut être inférieure, supérieure ou égale au pas de vis. Ainsi, pour former une zone de retenue, ou zone d'inversion de flux de matière, on pourra utiliser des bi-lobes à pas négatif ou une portion de vis à pas négatif, par exemple. Un tel dispositif va augmenter le temps de résidence du mélange ainsi que la pression en amont de celui-ci. Tout dispositif pouvant assurer un effet négatif sur le flux de matière, c'est à dire repoussant cette matière en direction de l'entrée, pourra convenir.

La pression au sein du cuiseur-extrudeur peut augmenter progressivement jusqu'au niveau du dispositif d'inversion du flux de matière, où elle peut être de l'ordre de 120 à 150 bars par exemple. En aval de ce dispositif, la valeur de pression peut diminuer et peut être comprise entre 60 et 100 bars, par exemple.

De plus, un dispositif de pétrissage de la matière peut être disposé après le ou les dispositifs d'inversion du flux. Un tel dispositif de malaxage positif peut ainsi être disposé dans le dernier quart aval de l'extrudeur. Ce dispositif sert à diminuer la pression en fin de malaxage, près de la buse d'extrusion. Il peut s'agir d'une succession de bi-lobes ou de mono-lobes positifs, par exemple.

On peut réaliser, pour la mise en oeuvre de ce procédé, un mélange comprenant de 50 à 75 % en poids environ de farine de blé, par exemple, que l'on mélange avec environ 25 à 50 % en poids d'amidon de pomme de terre, par exemple. A ce mélange, on ajoute environ 0,5 à 2 % en poids d'un émulsifiant ou d'un mélange d'émulsifiant, par exemple. Ce mélange est introduit à l'entrée d'un cuiseur extrudeur bi-vis, par exemple. Ce mélange est malaxé et on y ajoute environ 4 à 8 % d'eau et environ 3 à 5 % de matière grasse, par exemple. Ce mélange peut être malaxé et progressivement chauffé à l'intérieur d'un extrudeur bivis jusqu'aux environs de 140 à 150°C, par exemple. Les vis de l'extrudeur peuvent comprendre un système d'inversion du flux de matière disposé dans les deux derniers tiers de cet extrudeur. Après passage à travers ce dispositif, la matière peut être refroidie aux alentours de 50 à 80°C, par exemple. Enfin avant l'orifice de sortie, les vis peuvent comprendre un dispositif de malaxage composé de bilobes positifs, par exemple. Le produit cuit et malaxé peut être ensuite extrudé à travers une filière, par exemple. La filière peut être une plaque comprenant des trous dont le diamètre peut être compris entre 2 et 4 mm, par exemple.

On peut réaliser les opérations de mélange et/ou pétrissage en un temps de séjour de 30 à 60 secondes, par exemple dans l'extrudeur ou le malaxeur sous une pression de l'ordre de 50 à 150 bars, par exemple, tout en faisant tourner la ou les vis à une vitesse comprise entre 100 et 250 tours par minute, par exemple.

Ainsi, et de manière étonnante, bien que le procédé de cuisson-extrusion ne mette en oeuvre qu'une quantité réduite d'eau par rapport à ce que l'on connaît de l'art antérieur, la configuration des vis ainsi que les quantités et qualités des ingrédients nous permet de gélatiniser partiellement et d'obtenir au final un mélange de granules intacts, de granules gonflés et de granules éclatés dans des proportions qui permettent de conserver jusqu'à environ 80 % de la viscosité potentielle du mélange de départ. D'autre part, le produit reconstitué par ajout d'eau chaude ne présente pas de goût de farine crue ni de phénomène de post-thickening. On arrive à obtenir un cisaillement limité malgré la très faible teneur en eau grâce à l'ajout de matière grasse et d'émulsifiant. Ces derniers sont aussi responsables de la viscosité élevée obtenue après reconstitution ainsi que du faible post-thickening observé.

### EXEMPLE

On utilise dans cet exemple un cuiseur-extrudeur bivis CLEXTRAL® BC 45 d'une longueur de 1200 mm et dont la rapport Longueur/Diamètre est de 21,6. La vitesse de rotation des vis est de 220 tours/min. Le fourreau que constitue le cuiseur-extrudeur est sub-divisé en six zones thermosatées. Les vis du cuiseur-extrudeur sont aussi subdivisées en six zones de pas et de longueur différentes. Ainsi les quatre premières zones, zones de mélange et de pétrissage, présentent un pas de vis qui passe de 50 mm pour la première à 33 mm pour la seconde puis 25 mm pour les troisième et quatrième. Leur longueurs respectives sont de 200, 200, 200 et 150 mm. D'autre part les zones 2, 3 et 4 sont chauffées aux alentours de 140°C. Après ces zones de cuisson, est disposé un dispositif de reflux de matière constitué par une portion de vis de 50 mm de long à pas négatif repoussant la matière en direction de la zone d'entrée. A la suite de ce dispositif de reflux sont disposées deux zones thermostatées à 80°C de 100 et 150 mm de longueur dont les vis présentent un pas de vis de 50 et de 33 mm, respectivement. Ces deux dernières zones encadrent une zone de malaxage de 50 mm de long constituée par une succession de bilobes positifs. Enfin, une filière est prévue en fin de dernière zone pour mise en forme.

Un mélange comprenant 72,3 % de farine de blé, 26,2 % d'amidon de pomme de terre et 1,5 % de DIMODAN® est introduit à l'entrée du cuiseur-extrudeur. A 50 kg du mélange on ajoute, dans l'extrudeur 3,1 kg d'eau et 2 kg d'huile de tournesol.

La cuisson-extrusion est réalisée à une température d'environ 140°C sous une pression d'environ 130 bars, dans la portion médiane du cuiseur extrudeur. La partie terminale de l'extrudeur, à savoir les 300 derniers mm avant la filière, est refroidie à une température de l'ordre de 80°C.

La filière disposée à l'extrémité de l'extrudeur est constituée d'une plaque comprenant 5 trous de 2 mm de diamètre. Le produit en sortie de filière présente une température d'environ 90°C. Le produit ainsi obtenu est broyé jusqu'à une granulométrie de l'ordre de 0,15 mm puis refroidi avant emballage. On obtient ainsi un épaississant instantané sous forme pulvérulente.

Un tel épaississant est utilisé à raison de 30 g de produit auxquels on ajoute 450 ml d'eau bouillante. La viscosité développée par cet épaississant est de 480 unités Brabender. Le mélange initial non cuit extrudé, après cuisson en milieu aqueux dans une casserole, développe une viscosité de 610 unités Brabender. Il apparaît ainsi que le produit instantané selon l'invention permet de conserver 78,7 % de la viscosité potentielle du mélange initial. D'autre part, lors du refroidissement post dispersion la sauce réalisée grâce au produit selon l'invention présente une augmentation de viscosité (post-thickening) inférieure à 20 %.

Un produit instantané traditionnel dispersé dans les même conditions mène à un produit reconstitué qui présente une viscosité de l'ordre de 40 % de la viscosité potentielle du produit initial et de plus, lors du refroidissement, le post-thickening se manifeste par une augmentation de viscosité de l'ordre de 100 %.

## Revendications

1. Épaississant instantané comprenant en proportion en poids : 60 à 80 % de farine, 20 à 40 % d'amidon, 5 à 15 % d'eau, 2 à 6 % de matière grasse, 0 à 2 % de bicarbonate de sodium et de 0,5 à 3 % d'au moins un émulsifiant, dans lequel 40 à 80 % des grains d'amidon ont perdu leur structure cristalline tout en conservant leur intégrité.

2. Procédé de fabrication d'un épaississant instantané par traitement dans un cuiseur-extrudeur, à une température comprise entre 80 et 180°C, sous une pression de 50 à 160 bars pendant 30 à 60 secondes, d'un mélange comprenant en proportion en poids : 60 à 80 % de farine, 20 à 40 % d'amidon, 2 à 10 % d'eau rajoutée, 2 à 6 % de matière grasse, 0 à 2 % de bicarbonate de sodium et de 0,5 à 3 % d'au moins un émulsifiant, dans lequel le cuiseur-extrudeur comprend au moins un dispositif d'inversion du flux de matière prévu dans ses deux derniers tiers avals, et la matière est refroidie à une température comprise entre 60 et 100°C au sein du cuiseur-extrudeur après le dispositif d'inversion du flux de matière.

3. Procédé selon la revendication 2 dans lequel le produit obtenu en sortie du cuiseur-extrudeur est broyé à une granulométrie comprise entre 0,1 et 3 mm et de préférence entre 0,15 et 1 mm.

4. Procédé selon l'une des revendications 2 et 3 dans lequel le produit est séché jusqu'à un taux d'humidité d'environ 4 à 11 %, de préférence 5 à 7 %.

5. Procédé selon l'une des revendications 2 et 3 dans lequel le produit est revêtu ou enduit de matière grasse.

6. Procédé selon la revendication 2 dans lequel le cuiseur-extrudeur comprend en outre un dispositif de pétrissage de la matière après le ou les dispositifs d'inversion du flux.

## Patentansprüche

1. Instant-Verdickungsmittel, das in Gewichtsanteilen 60 bis 80 % Mehl, 20 bis 40 % Stärke, 5 bis 15 % Wasser, 2 bis 6 % Fett, 0 bis 2 % Natriumbicarbonat und 0,5 bis 3 % mindestens eines Emulgators enthält und bei dem 40 bis 80 % der Stärkekörner ihre kristalline Struktur verloren haben, wobei ihre Integrität bestehen bleibt.

2. Verfahren zur Herstellung eines Instant-Verdickungsmittels durch Behandlung einer Mischung, die in Gewichtsanteilen 60 bis 80 % Mehl, 20 bis 40 % Stärke, 2 bis 10 % zugesetztes Wasser, 2 bis 6 % Fett, 0 bis 2 % Natriumbicarbonat und 0,5 bis 3 % mindestens eines Emulgators enthält, in einem Kochextruder bei einer Temperatur von 80 bis 180°C unter einem Druck von 50 bis 160 Bar während 30 bis 60 Sekunden, wobei der Kochextruder mindestens eine Vorrichtung zur Umkehrung des Materialstroms aufweist, die in seinen beiden letzten stromab gelegenen Dritteln vorgesehen ist, und das Material im Inneren des Kochextruders hinter der Vorrichtung zur Umkehrung des Materialstroms auf eine Temperatur zwischen 60 und 100°C gekühlt wird.

3. Verfahren nach Anspruch 2, bei dem das am Austritt des Kochextruders erhaltene Produkt auf eine Korngröße von 0,1 bis 3 mm und vorzugsweise von 0,15 bis 1 mm zerkleinert wird.

4. Verfahren nach einem der Ansprüche 2 und 3, bei dem das Produkt bis zu einem Feuchtigkeitsgehalt von etwa 4 bis 11 %, vorzugsweise 5 bis 7 %, getrocknet wird.

5. Verfahren nach einem der Ansprüche 2 bis 3, bei dem das Produkt mit Fett überzogen oder bestrichen wird.

6. Verfahren nach Anspruch 2, bei dem der Kochextruder außerdem hinter der oder den Vorrichtungen zur Umkehrung des Stroms eine Vorrichtung zum Kneten des Materials aufweist.

## Claims

1. Instant thickener comprising as proportions by weight : 60 to 80 % flour, 20 to 40 % starch, 5 to 15 % water, 2 to 6 % fats, 0 to 2 % sodium bicarbonate and 0.5 to 3 % of at least one emulsifier, wherein 40 to 80 % of the starch grains have lost their crystalline structure while preserving their integrity.

2. Method for producing an instant thickener by treating in an extrusion cooker, at a temperature of between 80 and 180°C, at a pressure of 50 to 160 bar for 30 to 60 seconds, a mixture comprising in proportions by weight : 60 to 80 % flour, 20 to 40 % starch, 2 to 10 % added water, 2 to 6 % fats, 0 to 2 % sodium bicarbonate and 0.5 to 3 % of at least one emulsifier, wherein the extrusion cooker includes at least one device for reversing the flow of material provided in its last two downstream thirds, and the material is cooled to a temperature of between 60 and 100°C inside the extrusion cooker after the device for reversing the flow of material.

3. Method according to claim 2, wherein the product obtained at the outlet from the extrusion cooker is ground to a particle size of between 0.1 and 3 mm and preferably between 0.15 and 1 mm.

4. Method according to either of claims 2 or 3, wherein the the product is dried to a moisture content of approximately 4 to 11 %, preferably 5 to 7 %.

5. Method according to either of claims 2 or 3, wherein the the product is covered or coated with fat.

6. Method according to claim 2 wherein the extrusion cooker additionally includes a device for kneading the material after the device or devices for reversing the flow.
